# FASCICULE DE BREVET EUROPEEN

(11) **EP 0 717 383 B1**
(45) Date de publication et mention de la délivrance du brevet: **04.10.2001**
(21) Numéro de dépôt: 94402889.3
(22) Date de dépôt: 14.12.1994
(51) Int. Cl.: G08B 13/196

(54) **Procédé et dispositif de vidéosurveillance**
Video-Überwachungsverfahren und -Vorrichtung
Video surveillance method and device

(43) Date de publication de la demande: 19.06.1996
(73) Titulaire: THOMSON multimedia, 92648 Boulogne Cédex (FR)
(72) Inventeur: Hervé, Philippe, F-92402 Courbevoie Cedex (FR); Thoreau, Dominique, F-92402 Courbevoie Cedex (FR)
(74) Mandataire: Ruellan-Lemonnier, Brigitte

(56) Documents cités:
- EP-A- 0 512 854
- EP-A- 0 529 196
- FR-A- 2 589 020
- IBM TECHNICAL DISCLOSURE BULLETIN., vol.37, no.06B, Juin 1994, NEW YORK US page 313 'Automatic Video Surveillance Technique'

## Description

L'invention concerne un procédé et un dispositif de vidéosurveillance pour la surveillance de locaux ou autres lieux à distance.

La surveillance de lieux à distance est habituellement effectuée en un poste central d'observation ou poste de contrôle, lequel centralise les différentes alarmes et images vidéo provenant de caméras de surveillance disposées dans les endroits sensibles à surveiller.

Pour ce faire, une première solution consiste à disposer en ce poste autant de moniteurs de contrôle qu'il y a de caméras de surveillance permettant ainsi un contrôle permanent de tous les lieux mis sous surveillance, une deuxième solution consiste à n'utiliser qu'un seul ou un nombre limité d'écrans de contrôle sur lesquels défilent séquentiellement les images par scrutation successive des caméras utilisées. La première solution nécessite un équipement et une installation coûteux, la deuxième solution ne permet pas un contrôle permanent et instantané et de plus, le défilement d'images est pénible pour l'observateur.

De telles installations nécessitent généralement l'adjonction de détecteurs périmétriques ou volumétriques tels que radars hyperfréquences ou détecteurs infrarouges pour attirer l'attention du surveillant sur l'écran visualisant le lieu concerné par l'alarme. L'addition de ces détecteurs rend plus compliquée l'installation du système de surveillance. La fiabilité des alarmes volumétriques vendues dans le commerce n'est pas toujours très bonne, les réglages dérivent dans le temps. La sensibilité est souvent réduite pour limiter ces déclenchements ou éviter des réglages complexes. Le taux de confiance dans l'alerte est limité.

Le nombre de câbles de liaison vidéo entre les caméras et moniteurs de contrôle ou boîtier de séquencement réalisant la commutation séquentielle de chaque caméra sur le moniteur de contrôle est un autre facteur de coût pour l'installation, en particulier si les lieux à surveiller sont éloignés du local d'observation. Un multiplexage vidéo est certes possible pour réduire le nombre de liaisons mais nécessite généralement un échantillonnage lent des images vidéo à transmettre du fait du débit disponible sur la liaison, ce qui ne permet pas un contrôle permanent et simultané.

Il est connu, du document EP-A-529 196, des systèmes de visualisation de zone à distance transmettant des images sous forme comprimée. De tels systèmes nécessitent cependant des circuits spécifiques de traitement pour la détection. Les images relatives aux caméras ne peuvent être transmises simultanément, une sélection au niveau de la caméra, c'est à dire dans le dispositif de transmission, étant nécessaire.

La présente invention a pour but de pallier les inconvénients précités.

A cet effet, l'invention a pour objet un procédé de vidéosurveillance selon la revendication 1 et un dispositif selon la revendication 6.

L'invention allie les avantages de la compression de données et de la transmission multiplex à la réalisation simple et fiable de la fonction d'alerte.

Ainsi, les avantages obtenus grâce à cette invention consistent en une installation simplifiée du système de surveillance par la non nécessité d'alarmes de type volumétrique, la possibilité d'utilisation d'un seul moniteur de contrôle et d'une seule liaison multiplex de bande passante réduite pour le transport des images issues de plusieurs caméras tout en conservant une visualisation quasi-instantanée de la zone déclarée en alerte et une visualisation quasi-permanente de n'importe quel lieu à surveiller au choix du surveillant.

La compression de débit permet, en plus du transport d'informations à moindre coût, le stockage économique des images vidéo, la mémorisation instantanée de ces images lors d'une alarme évitant au surveillant une présence permanente devant le ou les moniteurs de contrôle.

La transmission multiplex permet de mémoriser simultanément des images vidéo provenant de sources différentes évitant ainsi toute perte d'information, par exemple lors de la gestion de conflit de type alarmes simultanées. La fiabilité de détection de mouvement est améliorée car le déclenchement de l'alerte est fonction de nombreux paramètres ajustables pour chaque scène visualisée. La zone du lieu surveillé concernée par cette détection peut être matérialisée sur l'écran pour aider le surveillant à l'identification et la corrélation. De manière plus générale, le procédé permet une grande souplesse de visualisation par traitement de la zone d'image déclarée en mouvement : repérage par surbrillance, augmentation de la résolution de la zone déclarée en mouvement...

Un tel dispositif peut être réalisé à faibles coût et encombrement en utilisant des circuits de codage et de décodage de type VLSI largement commercialisés pour être exploités dans le domaine de la compression de données, par exemple pour les applications de distribution d'image télévision tirant profit de la compression pour la multiplication des programmes ; ces circuits de codage peuvent être facilement intégrés dans des caméras vidéo, par exemple de type CCD.

D'autres particularités et avantages de l'invention apparaîtront clairement dans la description suivante donnée à titre d'exemple non limitatif et faite en regard des figures annexées qui représentent :
- la figure 1, un dispositif de codage inter et intra-image pouvant être utilisé pour la mise en oeuvre de l'invention,
- la figure 2, un dispositif de vidéosurveillance selon l'invention.

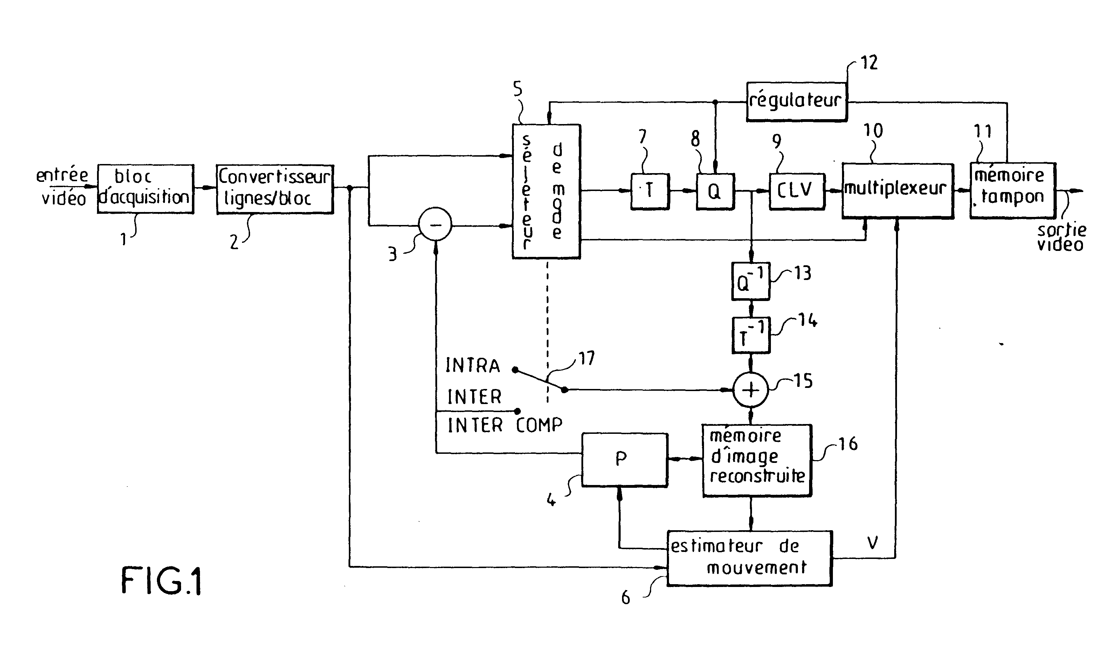

Un procédé de codage pouvant être utilisé pour la mise en oeuvre de l'invention est décrit ci-après à l'aide du schéma du dispositif de codage représenté à la figure 1. Il s'agit d'un dispositif de codage avec compression de signaux numériques à codage intra et inter-image avec compensation de mouvement d'un type de ceux couramment utilisés pour le codage des images de télévision.

L'entrée du codeur reçoit les signaux vidéo provenant d'une caméra vidéo. Un bloc d'acquisition 1 réalise la conversion analogiquenumérique dans le cas de signaux analogiques d'entrée, l'échantillonnage et la mémorisation des images. Il est relié à un convertisseur lignes/bloc 2 qui transforme les lignes vidéo en blocs d'image. Ceux-ci sont transmis parallèlement à un soustracteur 3 dont la deuxième entrée reçoit un bloc d'image prédit correspondant au bloc d'image courant et provenant d'un prédicteur P 4, à un sélecteur de mode 5 et enfin à un estimateur de mouvement 6. La sortie du soustracteur 3 représentant l'erreur entre bloc courant et bloc prédit est transmise au sélecteur de mode 5.

En fonction de critères correspondant à la valeur énergétique la plus faible, le sélecteur de mode choisit le bloc d'image intra provenant directement du convertisseur lignes/bloc 2 ou le bloc d'image provenant du soustracteur 3. Il s'agit respectivement des modes appelés mode INTRA et mode INTER COMP ou INTER selon que le bloc d'image présent sur la deuxième entrée du soustracteur 3 est compensé en mouvement ou pas comme indiqué plus loin.

Le bloc d'image sélectionné est ensuite transmis à un bloc de Transformation Cosinus Discrète T 7, un quantificateur Q 8, un circuit de codage à longueur variable CLV 9, un multiplexeur de données 10, une mémoire tampon 11 pour fournir, en sortie du codeur vidéo, les données compressées. Le multiplexeur 10 réalise le multiplexage des coefficients transformés du bloc d'image avec des vecteurs mouvement calculés par l'estimateur de mouvement 6 et les informations de mode provenant du sélecteur de mode 5. Le taux de remplissage de la mémoire tampon 11 agit, par l'intermédiaire d'un régulateur 12, sur le pas de quantification du quantificateur Q 8 et sur le sélecteur de mode 5. Un remplissage croissant de la mémoire tampon 11 entraîne une augmentation du pas de quantification et, à un niveau extrême, une interdiction de codage du bloc d'image par le sélecteur de mode 5. Les données en sortie du quantificateur Q 8 sont également transmises à un bloc de quantification inverse Q⁻¹ 13, un bloc de Transformation Cosinus Discrète Inverse T⁻¹ 14 et un additionneur 15 pour être mémorisées dans une mémoire d'image reconstruite 16.

Cet additionneur 15 reçoit sur sa deuxième entrée, soit aucune donnée et il est alors neutre, soit le bloc d'image prédit provenant du prédicteur P 4, par l'intermédiaire d'un commutateur 17 actionné par le sélecteur de mode 5 selon le mode choisi, ouvert en mode INTRA, fermé en mode INTER ou INTER COMP. La sortie de l'additionneur 15 fournit ainsi à la mémoire 16 l'image reconstruite à partir des données transmises vers le décodeur. L'estimateur de mouvement 6 compare le bloc d'image courant provenant du convertisseur lignes/bloc 2 à l'image précédente reconstruite mémorisée par la mémoire 16 pour fournir au multiplexeur 10 et au prédicteur P 4, dans le cas de sélection du mode de codage INTER COMP, un vecteur mouvement V correspondant au déplacement estimé de ce bloc d'image par rapport à l'image précédente. Ce prédicteur cherche ensuite dans la mémoire d'image reconstruite 16 le bloc d'image correspondant au vecteur mouvement pour le transmettre sur la deuxième entrée du soustracteur 3. C'est le bloc d'image prédit, pour lequel l'estimateur a effectué une compensation en mouvement. Lorsque le déplacement calculé par l'estimateur de mouvement 6 est nul, il correspond au mode INTER et le bloc d'image prédit est à la même position dans l'image que le bloc d'image courant ; dans l'autre cas, il s'agit du mode INTER COMP et le bloc d'image prédit correspond à la position du bloc d'image courant corrigée du vecteur mouvement. Le bloc d'image transmis au sélecteur de mode puis transformé est appelé bloc d'image inter dans le mode INTER et bloc d'image inter compensé dans le mode INTER COMP. Dans le cas d'une image fixe, les coefficients du bloc d'image inter peuvent être nuls ; ce cas particulier du mode INTER est appelé mode FIXE.

L'algorithme de décision d'alarme est basé sur le choix de mode effectué par le sélecteur de mode 5 et l'estimateur de mouvement 6. D'une manière générale, la probabilité d'intrusion est très faible lorsque la majorité des blocs d'image est codée en mode FIXE et/ou INTER, forte lorsqu'un certain nombre de ces blocs d'image est codé en mode INTER COMP et/ou INTRA. Ainsi le codage d'une image courante à partir d'un certain nombre de blocs d'image inter compensés est un exemple de condition de déclenchement d'alarme. Celle-ci peut être plus contraignante et basée sur l'apparition de blocs d'image intra pour le codage de l'image, suivie, pour le codage de l'image ou des images suivantes, de nouveaux blocs intra et de blocs inter compensés.

Cet algorithme de décision d'alarme fait également appel à une combinaison de différentes conditions telles que corrélation de vecteurs mouvement entre eux c'est-à-dire vecteurs mouvements compris dans une certaine fourchette quand au module et à l'argument , correspondance de blocs d'image inter compensés d'une image courante avec des blocs d'image intra ou inter compensés d'une image précédente relativement aux vecteurs mouvement. Ces combinaisons ainsi que le pourcentage ou nombre de blocs d'image et de vecteurs corrélés à partir duquel une condition est dite satisfaite dépendent de la nature et de l'importance du mouvement que l'on cherche à identifier, de la sensibilité souhaitée, de la fiabilité exigée et des conditions opérationnelles. Le choix de ces paramètres et conditions permet de s'affranchir des variations parasites par exemple d'éclairage de la scène observée ou du bruit de la caméra. Le débit maximum de transmission autorisé influe également sur ce choix : les algorithmes de codage à très bas débit génèrent des images reconstruites de qualité moyenne du fait d'un pas de quantification plus élevé et en conséquence rendent plus aléatoire le choix de mode ou la détermination des vecteurs mouvement nécessitant des conditions de déclenchement d'alarme plus strictes.

Les conditions précédentes excluent évidemment les images dont le codage est forcé et qui correspondent par exemple aux périodes de rafraîchissement ou initialisations.

De tels algorithmes de décision d'alarme peuvent être aisément mis en oeuvre par l'intermédiaire d'un microprocesseur convenablement programmé qui vient tester la présence, la valeur et la corrélation des vecteurs mouvements et les modes sélectionnés pour générer une alarme lorsque les conditions sont remplies, ce microprocesseur pouvant être celui du codeur ou spécifique à un générateur d'alarme couplé au codeur.

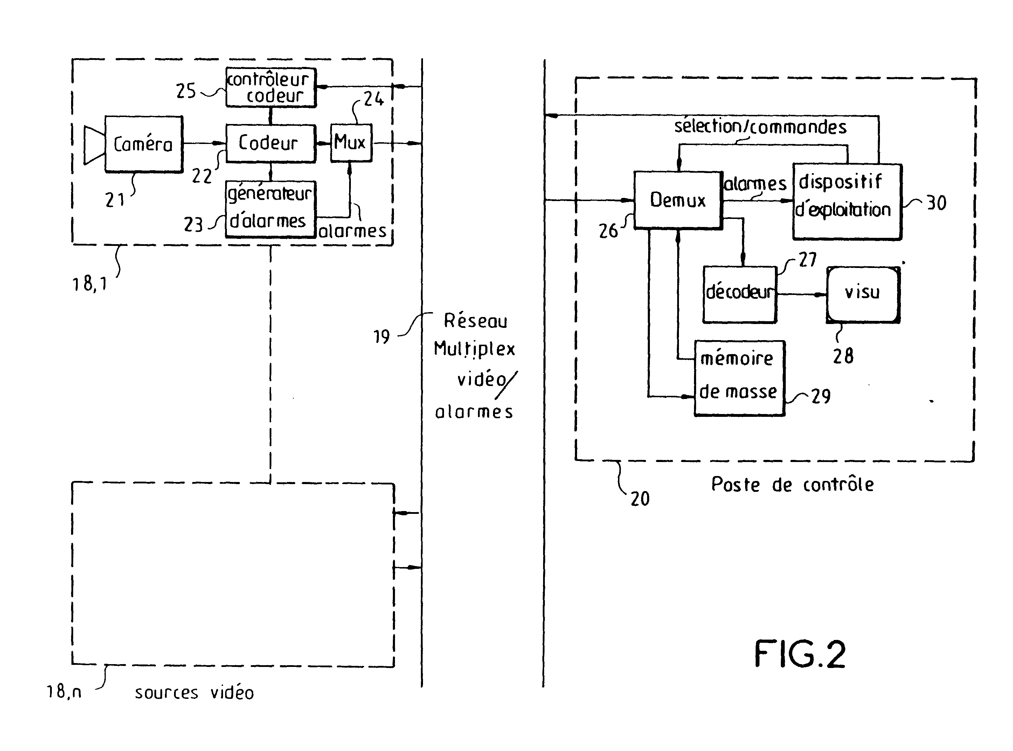

Le procédé de vidéosurveillance selon l'invention est décrit ci-après à l'aide du schéma du dispositif représenté à la figure 2. Ce dispositif utilise le procédé de codage et l'algorithme de déclenchement d'alerte décrits précédemment.

Il est constitué de n sources vidéo 18,1 à 18,n fournissant chacune en leur sortie un train binaire d'informations, un réseau multiplex 19 sur lequel sont branchées ces sources vidéo, un poste de contrôle 20 récupérant sur le réseau les trains binaires d'informations multiplexés et transmettant vers ce réseau multiplex 19 des commandes présentées à l'entrée de chaque source vidéo 18 par l'intermédiaire du réseau multiplex. La source vidéo 18 est constituée d'une caméra vidéo 21, par exemple de type CCD, d'un codeur 22 du type décrit à la figure 1 et recevant les signaux vidéo issus de la caméra 21, d'un générateur d'alarmes 23 traitant les informations provenant du codeur 22, d'un multiplexeur 24 réalisant le multiplexage des informations sortant du codeur et du générateur d'alarmes pour les transmettre au réseau multiplex 19. Enfin, un contrôleur codeur 25 exploite les données provenant du réseau multiplex 19 et du codeur 22 pour agir sur ce codeur 22.

Le codeur 22 comprime les informations vidéo pour transmettre en sortie un train binaire du signal vidéo composé d'informations binaires à longueur fixe ou variable telles que mots de synchronisation d'image, modes de codage, vecteurs mouvement, pas de quantification ainsi que les coefficients relatifs à l'image. Le générateur d'alarmes 23 reçoit du codeur 22 des données telles qu'adresse du bloc dans l'image, mode de codage utilisé pour ce bloc d'image, vecteur mouvement associé pour les traiter selon un algorithme tel que décrit précédemment et transmettre en sortie des informations d'alarme avec adresse du ou des blocs concernés dans l'image.

Le contrôleur codeur 25 reçoit, du réseau multiplex 19, des informations de commandes ou consignes telles qu'augmentation de la résolution d'une zone d'image définie par l'adresse de la ou des blocs d'image de cette zone. Il transmet au codeur 22 ces consignes après les avoir traduites en signaux exploitables par le codeur, par exemple les nouveaux pas de quantification correspondant à l'augmentation de résolution de blocs d'image compte-tenu des pas de quantification en régime permanent provenant du codeur.

Le poste de contrôle 20 est constitué des éléments décrits ci-après. Un démultiplexeur 26 reçoit les informations du réseau multiplex 19 et transmet par une première sortie les images vidéo compressées d'une source vidéo sélectionnée à un décodeur 27. Celui-ci réalise les opérations inverses du codeur 22 et transmet les signaux vidéo décompressés à un écran de visualisation 28. Une deuxième sortie du démultiplexeur 26 transmet les images vidéo compressées d'une ou des sources vidéo sélectionnées à une mémoire de masse 29 dont la sortie est reliée à une deuxième entrée du démultiplexeur 26. Une troisième sortie du démultiplexeur 26 transmet les informations d'alarme à un dispositif d'exploitation 30. Ainsi le démultiplexeur 26, qui réalise le démultiplexage des trains binaires provenant des différentes sources vidéo puis, pour chacune de ces sources, des images vidéo compressées et des informations d'alarme, transmet au décodeur et à la mémoire de masse le ou les signaux vidéo compressés sélectionnés et constitués de mots de synchronisation, modes de codage, vecteurs mouvement, pas de quantification et coefficients d'image et transmet au dispositif d'exploitation 30 les données binaires concernant les alarmes telles que numéro de la source vidéo, adresse des blocs d'image générant le déclenchement.

Une première sortie du dispositif d'exploitation 30, appelée sélection/commandes, est reliée à une troisième entrée du démultiplexeur 26 et permet de sélectionner une source vidéo provenant du réseau multiplex 19 pour la transmettre au décodeur 27 et la visualiser. Cette liaison permet également de transmettre les commandes relatives à la mémoire de masse 29 telles que sélection des sources vidéo à enregistrer, de la source à visualiser, commandes enregistrement, visualisation... Les données enregistrées sont transmises au décodeur 27 par l'intermédiaire du démultiplexeur 26. La visualisation en différé permet d'exploiter successivement les images enregistrées simultanément, fonction utile lors de déclenchements simultanés d'alarmes, ou bien de visualiser à nouveau une zone depuis l'instant de déclenchement de l'alarme, fonction utile lorsque le surveillant n'est pas à proximité immédiate de l'écran de visualisation ou désire garder une trace de l'intrusion pour identification ultérieure. Les sélections et commandes peuvent être réalisées d'une manière automatique en fonction des données binaires concernant les alarmes ou par commande de l'opérateur agissant manuellement sur le dispositif d'exploitation. Dans le cas où le réseau multiplex 19 est bidirectionnel, une deuxième sortie du dispositif d'exploitation 30 relie ce dernier au réseau 19 pour transmettre des informations telles que consigne d'augmentation de la résolution, adresse des blocs d'image et numéro des sources vidéo concernées, informations exploitées par le contrôleur codeur 25 des sources vidéo 18 concernées. Ces consignes sont établies par l'opérateur agissant sur le dispositif d'exploitation ou automatiquement.

Ce dispositif de vidéosurveillance est donné à titre d'exemple. Il peut ainsi être amélioré fonctionnellement par l'adjonction de commandes de position de caméras transmises par le dispositif d'exploitation vers les sources vidéo lorsque ces caméras sont orientables par commande électrique, les circuits d'alarme étant inhibés lors du déplacement de la caméra. Il peut également être simplifié par l'utilisation d'un réseau multiplex unidirectionnel ou encore par l'utilisation d'une seule caméra reliée au poste de contrôle 20.

Le dispositif est décrit avec des caméras fonctionnant dans le domaine du visible. D'autres types de caméras, par exemple des caméras infra-rouges, particulièrement adaptées a la détection du mouvement dans les zones non éclairées, conviennent également à l'invention.

Dans le cas où deux ou plusieurs caméras visualisent la même scène sous des angles différents, l'algorithme de décision d'alarme peut être complété par des tests de corrélation concernant les informations d'alarme provenant de ces différentes sources vidéo.

Le codeur 22 utilisé par le dispositif de vidéosurveillance est donné à titre d'exemple. Un codeur avec codage intra et inter-image sans compensation de mouvement peut également convenir à la réalisation de cette invention, l'algorithme de décision d'alarme exploitant alors plus particulièrement le nombre et l'évolution des blocs codés en mode INTRA d'une image à l'autre, de même qu'un codeur plus complexe exploitant la projection de vecteurs mouvement.

## Revendications

1. Procédé de vidéosurveillance consistant à compresser les données vidéo (22) relatives à des images fournies par au moins une caméra de vidéosurveillance (21), **caractérisé en ce que** la compression de données exploite un codage intra et inter images, avec estimation de mouvement, de blocs d'images constituant une image, **en ce qu'**un signal d'alarme (23) est généré en fonction du type de codage sélectionné pour chaque bloc d'image et de la nature ou importance du mouvement dans l'image et **en ce que** les informations d'alarme et données compressées sont transmises à un poste de contrôle par l'intermédiaire d'un réseau de multiplexage vidéo.

2. Procédé selon la revendication 1, **caractérisé en ce qu'**il consiste à coder l'image suivant un mode de codage inter-image prédictif basé sur l'estimation de mouvement (4) et **en ce qu'**il consiste à générer le signal d'alarme (23) en fonction du type de codage sélectionné pour chaque bloc d'image (5,6) et des vecteurs mouvement des blocs d'image calculés lors de l'estimation de mouvement (4).

3. Procédé selon la revendication précédente, **caractérisé en ce que** la génération du signal d'alarme (23) est liée à la corrélation de vecteurs mouvement des blocs d'image de l'image courante.

4. Procédé selon la revendication 2, **caractérisé en ce que** la génération du signal d'alarme (23) est liée à la correspondance de blocs d'image inter compensés de l'image courante avec des blocs d'images intra ou inter compensés d'une image précédente relativement à leurs vecteurs mouvement.

5. Procédé selon l'une quelconque des revendications précédentes, **caractérisé en ce que** les données compressées sont multiplexées (24) avec des informations d'alarme (23) relatives au codage (22) pour fournir des données relatives à une caméra et **en ce que** les données relatives à une caméra sont multiplexées avec des données relatives à une autre caméra pour leur transmission à un poste de contrôle (20).

6. Dispositif de vidéosurveillance constitué d'au moins une source vidéo (18) avec caméra vidéo (27) et générateur d'alarmes (23), la caméra étant couplée à un codeur (22) à compression de données, **caractérisé en ce que** le codeur (22) effectue un codage intra et inter-images avec estimation de mouvement et **en ce que** le générateur d'alarmes (23) est couplé au codeur (22) pour traiter les informations concernant le type de codage et l'estimation de mouvement provenant du codeur (22) et **en ce que** les sources vidéo (18) sont reliées à un poste de contrôle (20) par l'intermédiaire d'un réseau de multiplexage vidéo (19) pour le multiplexage et la transmission des informations d'alarme et données compressées.

7. Dispositif selon la revendication 6, **caractérisé en ce qu'**au moins une des caméras vidéo (22) est une caméra infrarouge.

## Patentansprüche

1. Verfahren zur Videoüberwachung mit einer Komprimierung von Videodaten (22) für Bilder, die von wenigstens einer Kamera (21) zur Videoüberwachung geliefert werden,
**dadurch gekennzeichnet, daß**
die Komprimierung der Daten eine Intra- und Inter-Bildkodierung auswertet, mit einer Bewegungsschätzung der ein Bild darstellenden Bildblöcke und **daß** ein Alarmsignal (23) in Abhängigkeit von dem Typ der Kodierung, die für jeden Bildblock gewählt wurde, und von der Art und der Bedeutung der Bewegung in dem Bild erzeugt wird, und **daß** die Alarminformationen und die komprimierten Daten über ein Video-Multiplexnetz zu einer Steuerstation übertragen werden.

2. Verfahren nach Anspruch 1, **dadurch gekennzeichnet, daß** das Bild nach einem Voraussage-Zwischen-Bild-Kodiermodus kodiert wird, der auf der Bewegungsschätzung (4) beruht, und **daß** das Alarmsignal (23) in Abhängigkeit von dem Typ der für jeden Bildblock (5, 6) gewählten Kodierung und den Bewegungsvektoren der bei der Bewegungsschätzung berechneten Bildblöcke (4) erzeugt wird.

3. Verfahren nach dem vorangehenden Anspruch, **dadurch gekennzeichnet, daß** die Erzeugung des Alarmsignals (23) mit der Korrelation der Bewegungsvektoren der Bildblöcke des laufenden Bildes verknüpft ist.

4. Verfahren nach Anspruch 2, **dadurch gekennzeichnet, daß** die Erzeugung des Alarmsignals (23) mit der Übereinstimmung der kompensierten Inter-Bildblöcke des laufenden Bildes mit den Intra-Bildblöcken oder den kompensierten Inter-Bild-Blöcken eines vorangehenden Bildes bezüglich ihrer Bewegungsvektoren verknüpft ist.

5. Verfahren nach einem der vorangehenden Ansprüche, **dadurch gekennzeichnet, daß** die komprimierten Daten mit Alarminformationen (23) für die Kodierung (22) gemultiplext werden (24), um Daten einer Kamera zu tiefem, und **daß** die Daten einer Kamera für ihre Übertragung zu einer Steuerstation (20) mit den Daten einer anderen Kamera gemultiplext werden.

6. Vorrichtung zur Videoüberwachung mit wenigstens einer Videoquelle (18) mit einer Videokamera (27) und einem Alarmgenerator (23), wobei die Kamera mit einem Koder (22) zur Datenkomprimierung verbunden ist, **dadurch gekennzeichnet, daß** der Koder (22) eine Intra- und Inter-Bild-Kodierung mit einer Bewegungsschätzung bewirkt und **daß** der Alarmgenerator (23) mit einem Koder (22) verbunden ist, um die Informationen über den Kodiertyp und die Bewegungsschätzung von dem Koder zu verarbeiten (22), und **daß** die Videoquellen (18) für die Multiplexierung und die Übertragung der Alarminformationen und der komprimierten Daten über ein Video-Multiplexnetz (19) mit einer Steuerstation (20) verbunden sind.

7. Vorrichtung nach Anspruch 6, **dadurch gekennzeichnet, daß** wenigstens eine der Videokameras (22) eine Infrarot-Kamera ist.

## Claims

1. Videosurveillance process consisting in compressing the video data (22) relating to images provided by at least one videosurveillance camera (21), **characterized in that** the data compression utilizes image intra and inter coding, with motion estimation, of image blocks constituting an image, **in that** an alarm signal (23) is generated as a function of the type of coding selected for each image block and of the nature or magnitude of the motion in the image and **in that** the alarm information and compressed data are transmitted to a control station by way of a video multiplexing network.

2. Process according to Claim 1, **characterized in that** it consists in coding the image according to a predictive inter-image coding mode based on motion estimation (4) and **in that** it consists in generating the alarm signal (23) as a function of the type of coding selected for each image block (5, 6) and of the motion vectors of the image blocks calculated during motion estimation (4).

3. Process according to the preceding claim, **characterized in that** the generation of the alarm signal (23) is linked with the correlation of motion vectors of the image blocks of the current image.

4. Process according to Claim 2, **characterized in that** the generation of the alarm signal (23) is linked with the correspondence of compensated inter image blocks of the current image with compensated intra or inter image blocks of a previous image in relation to their motion vectors.

5. Process according to any one of the preceding claims, **characterized in that** the compressed data are multiplexed (24) with alarm information (23) relating to the coding (22) so as to provide data relating to a camera and **in that** the data relating to a camera are multiplexed with data relating to another camera for their transmission to a control station (20).

6. Videosurveillance device consisting of at least one video source (18) with video camera (27) and alarm generator (23), the camera being coupled to a data compression coder (22), **characterized in that** the coder (22) performs an intra and inter-image coding with motion estimation and **in that** the alarm generator (23) is coupled to the coder (22) so as to process the information relating to the type of coding and the motion estimation originating from the coder (22) and **in that** the video sources (18) are linked to a control station (20) by way of a video multiplexing network (19) for the multiplexing and transmission of the alarm information and compressed data.

7. Device according to Claim 6, **characterized in that** at least one of the video cameras (22) is an infrared camera.
